# FASCICULE DE BREVET EUROPEEN

(11) **EP 1 277 017 B1**
(45) Date de publication et mention de la délivrance du brevet: **16.03.2005**
(21) Numéro de dépôt: 01928039.5
(22) Date de dépôt: 23.04.2001
(51) Int. Cl.: F24F 3/00, F24F 12/00

(54) **INSTALLATION DE VENTILATION ET DE TRAITEMENT THERMIQUE DE L'AIR DANS UN IMMEUBLE COMPORTANT PLUSIEURS LOGEMENTS**
VORRICHTUNG ZUR THERMISCHEN LUFTBEHANDLUNG UND ZUR BELÜFTUNG IN EINEM GEBÄUDE MIT MEHREREN RÄUMEN
VENTILATION AND AIR HEATING TREATMENT INSTALLATION IN A BUILDING COMPRISING SEVERAL HOUSING UNITS

(30) Priorité: 25.04.2000 FR 0005259
(43) Date de publication de la demande: 22.01.2003
(73) Titulaire: ALDES AERAULIQUE, 69200 Venissieux Cedex (FR)
(72) Inventeur: PELLETER, Xavier, F-31500 Toulouse (FR); LABAUME, Damien, Résidence La Tolosan 2, F-31320 Castanet Tolosan (FR)
(74) Mandataire: Maureau, Philippe
(86) Numéro de dépôt international: PCT/FR2001/001242
(87) Numéro de publication internationale: WO 2001/081833

(56) Documents cités:
- EP-A- 0 909 926
- WO-A-97/06390
- FR-A- 2 778 228
- US-A- 4 655 278

## Description

La présente invention a pour objet une installation de ventilation dans un immeuble comportant plusieurs logements. Le terme logement doit être pris au sens large, et pouvant concerner tout aussi bien des logements d'habitation que d'autres locaux, par exemple à usage de bureaux.

Pour réaliser le traitement de la qualité de l'air, la solution la plus traditionnelle consiste à utiliser une ventilation mécanique contrôlée à simple flux. Un groupe de ventilation placé, par exemple, sur le toit du bâtiment réalise l'extraction de l'air dans les pièces techniques, telles que cuisines et salles de bains, des différents logements, tandis que l'air est admis dans les pièces de séjour des différents logements par des entrées d'air, placées par exemple dans les huisseries. Ces entrées d'air peuvent provoquer des nuisances acoustiques, car elles laissent passer le bruit venant de l'extérieur et peuvent procurer un inconfort thermique en hiver, dans la mesure où elles admettent de l'air froid. Aucune récupération d'énergie n'étant possible sur le renouvellement d'air, la ventilation est alors une source importante de déperditions thermiques.

Une autre solution connue concerne les systèmes de ventilation à double flux. Dans ce cas, il existe un groupe de ventilation insufflant l'air pris à l'extérieur du bâtiment dans les pièces de séjour (salons, chambres à coucher...) des différents logements, et un groupe de ventilation, ayant les mêmes caractéristiques que le groupe d'insufflation, assurant l'extraction d'air hors des pièces techniques (cuisines, salles de bains...) des différents logements. Des échangeurs statiques individuels air-air peuvent être disposés au niveau de chaque logement ou au niveau des groupes de ventilation, pour réaliser un préchauffage de l'air insufflé par l'air extrait (voir par exemple le document FR-A-2 778 228). Le bilan thermique est donc supérieur à celui d'une installation à simple flux, car il y a récupération de l'énergie sur l'air extrait. En outre, les problèmes de nuisances acoustiques sont supprimés, puisqu'il n'existe pas d'entrées d'air mettant chaque pièce de séjour en communication avec l'extérieur.

Il se pose également de plus en plus souvent le problème du traitement thermique de l'air en toute saison.

Une première solution consiste en des systèmes individuels de climatisation comprenant chacun une unité extérieure et une unité intérieure fonctionnant en recyclage. Un tel système, complètement indépendant de la ventilation, est très contraignant d'un point de vue de son installation, puisqu'il faut prévoir une unité extérieure et un réseau de fluide frigorigène. Outre le coût élevé de réalisation, une telle installation peut également provoquer des nuisances acoustiques avec une unité à l'extérieur et un ventilateur à l'intérieur du logement et des nuisances esthétiques pour les mêmes raisons.

Une autre solution consiste à prévoir une unité extérieure collective reliée soit à une batterie froide collective placée sur le réseau d'insufflation, soit à des unités individuelles placées dans les logements et fonctionnant en recyclage. Cette solution, outre son manque de flexibilité, n'est pas utilisée aujourd'hui dans des logements à usage d'habitations, car elle pose des problèmes au niveau de la régulation, du comptage d'énergie par appartement et des déperditions dans les conduits.

Le but de l'invention est de fournir une installation de ventilation et de traitement thermique de l'air dans un immeuble comportant plusieurs logements, qui soit de structure simple et modulable.

A cet effet, l'installation qu'elle concerne, du type comportant un système de ventilation à double flux avec un groupe de ventilation insufflant l'air pris à l'extérieur du bâtiment dans les pièces de séjour : salons, chambres à coucher... des différents logements, et un groupe de ventilation, ayant les mêmes caractéristiques que le groupe d'insufflation, assurant l'extraction d'air hors des pièces techniques : cuisines, salles de bains... de l'air insufflé dans les pièces de séjour, l'amenée et l'extraction d'air au niveau de chaque logement étant réalisées par l'intermédiaire de conduits collectifs au bâtiment, est caractérisée en ce qu'elle comprend au niveau du raccordement de chaque logement à une paire de conduits respectivement d'insufflation et d'extraction d'air un groupe thermodynamique individuel dédié au logement considéré et sur lequel passe le flux de l'air de ventilation, l'évaporateur et le condenseur de ce groupe étant disposés respectivement sur l'un des deux flux d'insufflation et d'extraction d'air.

Avantageusement, le groupe thermodynamique est logé dans un caisson comportant au moins deux compartiments munis chacun d'une entrée et d'une sortie d'air et contenant respectivement l'évaporateur et le condenseur du groupe thermodynamique.

Suivant un mode de mise en oeuvre de cette installation, l'évaporateur du groupe thermodynamique est disposé sur le flux d'air insufflé à l'intérieur du logement, et le condenseur est disposé sur le flux d'air extrait du logement.

L'installation selon l'invention comprend donc des groupes de ventilation collectifs, et des conduits et sous-ensembles thermodynamiques individuels sans ventilateurs. Les sous-ensembles thermodynamiques individuels sont installés sur la boucle aéraulique collective, qui remplit la fonction de ventilation mécanique contrôlée à double flux collective de l'immeuble.

L'installation selon l'invention permet donc de gérer une qualité d'air totale dans chaque logement en assurant les débits de renouvellement d'air réglementaires et une filtration de l'air insufflé. En plus de cette gestion de la qualité d'air, l'installation permet un traitement thermique individualisé par production de froid en période estivale, grâce à l'air véhiculé par la ventilation collective. L'air insufflé est rafraîchi par passage sur l'évaporateur du groupe thermodynamique et les calories sont évacuées par l'air extrait de la ventilation mécanique contrôlée. Afin d'améliorer les performances du système thermodynamique, cette installation comprend un conduit de dérivation entre les compartiments contenant l'évaporateur et le condenseur, assurant le passage sur le condenseur d'un débit d'air complémentaire ne passant pas par le logement. Cela permet une augmentation de la puissance thermodynamique sans grever le bilan thermique du logement considéré.

Afin de ne pas perturber l'équilibre de la colonne de ventilation, sur le conduit de dérivation est monté un registre qui est placé en position d'ouverture lorsque le groupe thermodynamique est en fonctionnement avec passage du débit d'air insufflé sur l'évaporateur, et qui est actionné vers sa position de fermeture lors du passage en position de débit d'extraction maximum dans la cuisine.

Suivant un mode avantageux de mise en oeuvre de cette installation, en période hivernale, le condenseur du groupe thermodynamique est disposé sur le flux d'air insufflé à l'intérieur du logement et l'évaporateur est disposé sur le flux d'air extrait du logement. Le système thermodynamique récupère les calories de l'air extrait pour réchauffer l'air insufflé. Le registre du conduit de dérivation est alors en position fermée.

Le conduit de dérivation peut contenir également un module de régulation de débit placé en amont ou en aval du registre. Ce module est destiné à assurer une égalité du débit dans les différents appartements lorsque le nombre de ceux-ci est important.

Avantageusement, le groupe thermodynamique est de type réversible, avec possibilité d'inverser le sens de fluide frigorigène et d'inverser les fonctions de l'évaporateur et du condenseur. Cet agencement permet, sans modifier le parcours de circulation d'air au niveau du groupe thermodynamique, d'utiliser celui-ci pour préchauffer l'air en hiver et pour rafraîchir l'air en été.

Suivant une caractéristique de l'invention, le groupe thermodynamique est relié à un clavier de commande et piloté par un thermostat disposé dans le logement.

En l'absence d'un autre système de chauffage, un dispositif optionnel de chauffage complémentaire peut être installé sur l'insufflation. A cet effet, les bouches d'insufflation d'air dans les différentes pièces de séjour sont équipées d'un dispositif de chauffage électrique complémentaire de l'air insufflé, pouvant être commandé par une sonde de température également reliée au groupe thermodynamique. Selon les besoins du logement, ce dispositif peut fonctionner soit uniquement avec le débit d'air neuf, soit avec un débit complémentaire en recyclage au niveau de la bouche d'insufflation si la puissance nécessaire est trop importante.

On dispose alors d'une régulation pièce par pièce au niveau de chaque terminal d'insufflation. Ces régulations pièce par pièce étant reliées au système thermodynamique par la gestion électronique, la régulation de l'ensemble peut être optimisée tout en évitant les problèmes de fonctionnement antagoniste entre le système thermodynamique et les résistances électriques de chauffage complémentaires.

Il est possible de noter les différents avantages suivants relatifs à une telle installation.

La qualité de l'air est assurée par le système de ventilation mécanique contrôlée avec des débits conformes à la réglementation et possibilité de filtration de l'air insufflé.

Sur le plan thermique, le confort est obtenu en été par rafraîchissement d'air, par récupération d'énergie sur l'air extrait, et en hiver par préchauffage de l'air insufflé qui conduit à une économie sur la consommation de chauffage. Il s'agit d'une régulation individuelle au niveau de chaque groupe thermodynamique, avec un comptage individuel des consommations et sans perte thermique inutile dans les conduits traversant les parties communes de l'immeuble.

En ce qui concerne la conception de l'installation, il faut noter qu'il n'est pas obligatoire d'équiper tous les logements d'un groupe thermodynamique, certains logements pouvant être équipés d'un tel groupe et d'autres logements pouvant être équipés d'un échangeur statique, avec possibilité de remplacement, lorsque cela est souhaité, de l'échangeur statique par un échangeur thermodynamique, ce qui permet d'étaler les investissements.

En ce qui concerne la mise en oeuvre, il faut retenir que chaque module thermodynamique est autonome, ne nécessite pas de réseau de fluide à installer, ne comporte pas d'unité extérieure au bâtiment, comme tel est le cas avec des dispositifs de climatisation connus, ne comporte pas de ventilateur intérieur, comme tel est le cas avec des dispositifs de ventilation connus, puisque le débit d'air est assuré par la ventilation mécanique contrôlée collective de l'immeuble.

De toute façon, l'invention sera bien comprise, à l'aide de la description qui suit, en référence au dessin schématique annexé représentant, à titre d'exemple, non limitatif une forme d'exécution de cette installation :
Figures 1 et 2 sont deux vues schématiques d'une installation respectivement en fonctionnement hiver et en fonctionnement été ;
Figures 3 et 4 sont deux vues d'un module thermodynamique équipant un logement, respectivement en position hiver et en position été ;
Figure 5 est une vue d'un caisson contenant un module thermodynamique ;
Figure 6 est une vue très schématique d'un mode de régulation d'un module thermodynamique.

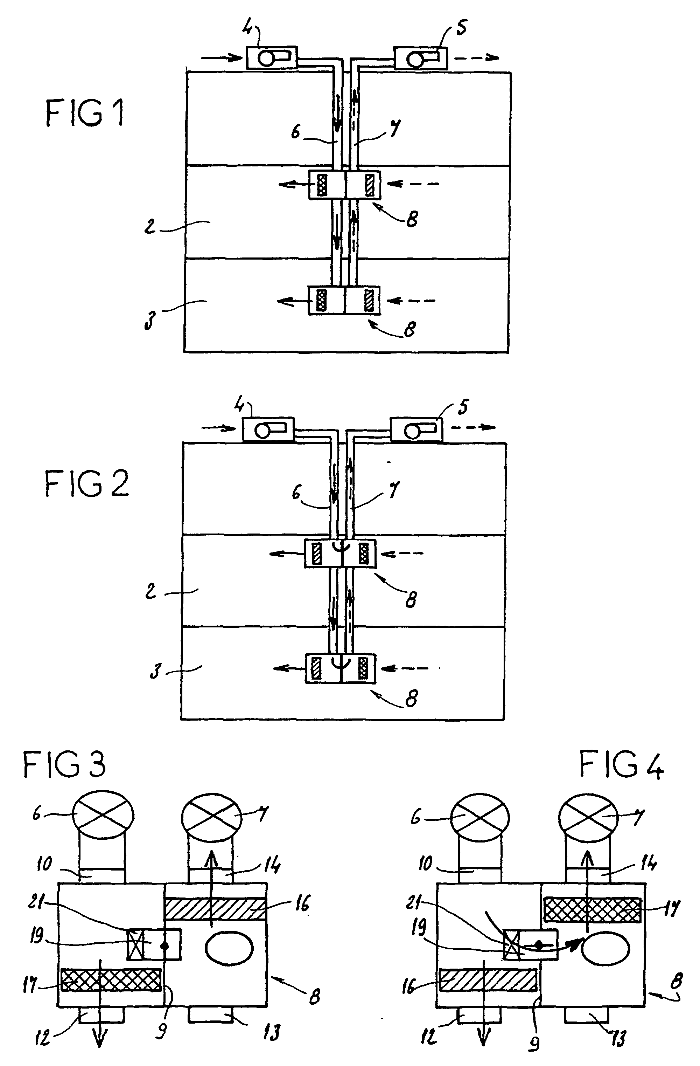

Les figures 1 et 2 représentent un immeuble comportant deux logements 2 et 3. En partie haute de l'immeuble sont disposés un groupe d'insufflation d'air 4 et un groupe d'extraction d'air 5 dimensionnés en fonction des configurations du réseau. Le groupe d'insufflation d'air 4 envoie de l'air par l'intermédiaire d'une colonne 6 aux différents logements, tandis que l'air est extrait de ceux-ci par le groupe 5 par l'intermédiaire d'une colonne 7. L'insufflation d'air et l'extraction au niveau de chaque logement est réalisée par un caisson contenant un groupe thermodynamique 8. Le groupe thermodynamique désigné par la référence générale 8 comprend un caisson séparé en deux compartiments par une cloison centrale 9, chaque compartiment comportant un orifice d'entrée d'air et un orifice de sortie d'air.

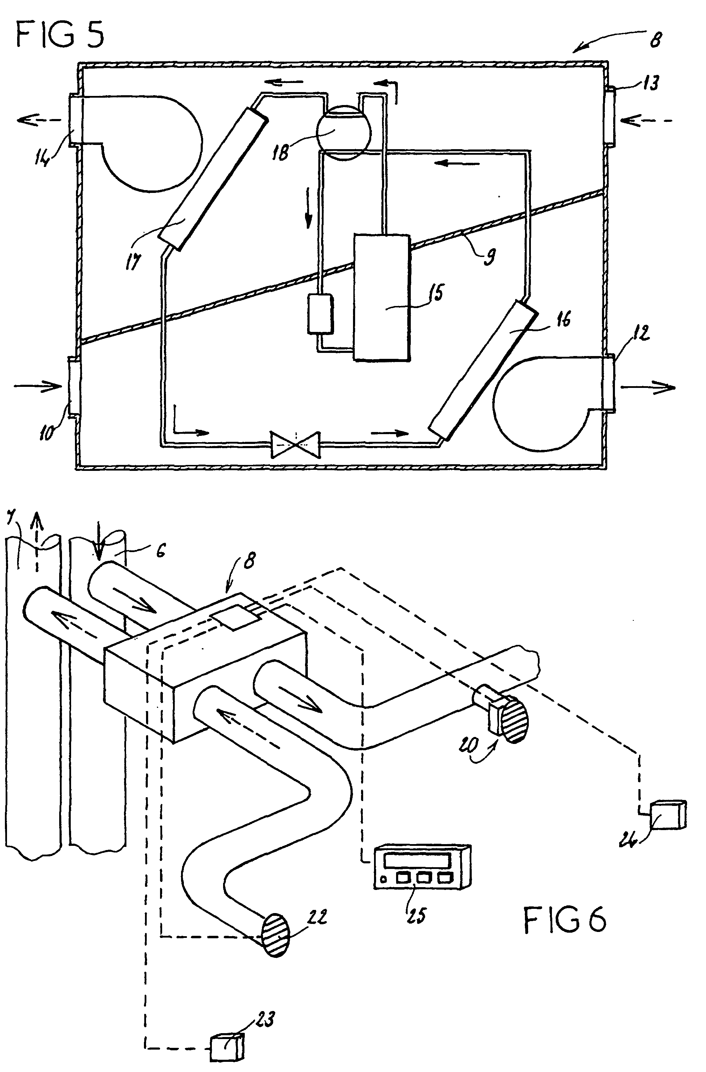

Dans la figure 5, l'orifice d'entrée d'air neuf est désigné par la référence générale 10, l'orifice de sortie d'air neuf vers le logement par la référence 12, l'orifice de reprise d'air dans le logement par la référence 13 et l'orifice de rejet d'air vers l'extérieur par la référence 14. Le groupe thermodynamique comprend, de façon connue en soi, un compresseur 15, ainsi qu'un évaporateur 16 et un condenseur 17, l'évaporateur 16 et le condenseur 17 étant logés dans deux compartiments distincts. Il est à noter que sur le circuit du fluide frigorigène est disposée une vanne 18 à quatre voies qui permet d'inverser le sens de circulation du fluide. Il est ainsi possible d'inverser les fonctions remplies par l'évaporateur et le condenseur, l'évaporateur devenant condenseur et inversement suivant le sens de circulation du fluide.

Comme montré aux figures 3 et 4, il existe un conduit de dérivation entre les deux compartiments du caisson contenant le groupe thermodynamique, ce conduit de dérivation étant équipé d'un registre 19 permettant de réaliser sa fermeture. En période hivernale, pour réaliser le préchauffage de l'air, le registre 19 étant en position fermée, la vanne à quatre voies 18 montée sur le circuit du fluide frigorigène est commutée de telle sorte que l'élément situé dans le compartiment d'insufflation d'air vers le logement soit le condenseur, comme montré aux figures 1 et 3.

Au contraire, en période estivale, la vanne 18 est commutée de telle sorte que l'élément formant évaporateur se trouve dans la partie insufflation d'air du caisson et l'élément formant condenseur se trouve dans la partie extraction du caisson. Le registre 19 est alors en position ouverte, comme montré à la figure 4, pour permettre un passage direct d'une partie d'un certain débit d'air sur le condenseur pour améliorer les performances du groupe thermodynamique.

Il est possible d'associer au registre 19 un module de régulation de débit 21 destiné à assurer une égalité du débit dans les différents appartements lorsque le nombre de ceux-ci est important.

La figure 6 représente très schématiquement la régulation et le contrôle d'un groupe thermodynamique. Sur cette figure, une bouche d'insufflation d'air 20 est représentée, qui est munie d'un module de chauffage, par exemple de chauffage électrique. Une bouche d'extraction en cuisine est désignée par la référence 22. Cette figure représente également un interrupteur 23 de commutation du débit en cuisine d'une valeur de ventilation normale vers une valeur de ventilation plus importante, par exemple pour permettre le passage de 45 à 135 m³ d'air extrait par heure. Il est également prévu une sonde 24 de température par pièce principale comportant une bouche 20 ainsi qu'un clavier de commande générale avec une sonde de température intérieure 25. Il est possible de régler le mode de fonctionnement du groupe thermodynamique en rafraîchissement ou en préchauffage à l'aide du clavier de commande. En outre, la sonde de température associée permet de mettre en marche ou de stopper le fonctionnement du module thermodynamique. L'interrupteur 23 permet, en période d'utilisation du groupe pour rafraîchir l'air, de fermer le registre 19 lorsque l'on augmente la valeur du débit extrait en cuisine, pour ne pas déséquilibrer la colonne de ventilation.

La sonde de température 24 reliée au module thermodynamique, placée dans une pièce principale de séjour équipée d'une bouche présentant un système de chauffage additionnel, permet d'optimiser la régulation et d'éviter les problèmes de fonctionnement antagonistes entre le groupe thermodynamique et le système de chauffage additionnel.

Comme il va de soi, l'invention ne se limite pas à la seule forme d'exécution de cette installation, décrite ci-dessus à titre d'exemple, elle en embrasse au contraire toutes les variantes. C'est ainsi notamment qu'un même logement pourrait être équipé, en fonction de sa taille, de plusieurs groupes thermodynamiques, ou encore que les bouches de distribution d'air neuf dans les pièces de séjour pourraient ne pas comporter de système de chauffage additionnel sans que l'on sorte pour autant du cadre de l'invention.

## Revendications

1. Installation de ventilation et de traitement thermique de l'air dans un immeuble comportant plusieurs logements, du type comportant un système de ventilation à double flux avec un groupe de ventilation insufflant l'air pris à l'extérieur du bâtiment dans les pièces de séjour : salons, chambres à coucher... des différents logements, et un groupe de ventilation (5), ayant les mêmes caractéristiques que le groupe d'insufflation, assurant l'extraction d'air hors des pièces techniques : cuisines, salles de bains... de l'air insufflé dans les pièces de séjour, l'amenée et l'extraction d'air au niveau de chaque logement étant réalisées par l'intermédiaire de conduits collectifs au bâtiment, **caractérisée en ce qu'**elle comprend au niveau du raccordement de chaque logement à une paire de conduits (6, 7) respectivement d'insufflation et d'extraction d'air un groupe thermodynamique individuel (8) dédié au logement considéré et sur lequel passe le flux de l'air de ventilation, l'évaporateur et le condenseur de ce groupe étant disposés respectivement sur l'un des deux flux d'insufflation et d'extraction d'air.

2. Installation de ventilation selon la revendication 1, **caractérisée en ce que** le groupe thermodynamique (8) est logé dans un caisson comportant au moins deux compartiments munis chacun d'une entrée (10, 13) et d'une sortie d'air (12, 14) et contenant respectivement l'évaporateur (16) et le condenseur (17) du groupe thermodynamique.

3. Installation de ventilation selon l'une des revendications 1 et 2, **caractérisée en ce que** l'évaporateur (16) du groupe thermodynamique (8) est disposé sur le flux d'air insufflé à l'intérieur du logement, et le condenseur (17) est disposé sur le flux d'air extrait du logement.

4. Installation de ventilation selon la revendication 3, **caractérisée en ce qu'**elle comprend un conduit de dérivation entre les compartiments contenant l'évaporateur et le condenseur, assurant le passage sur le condenseur (17) d'un débit d'air complémentaire ne passant pas par le logement.

5. Installation de ventilation selon la revendication 4, **caractérisée en ce que** sur le conduit de dérivation est monté un registre (19) qui est placé en position d'ouverture lorsque le groupe thermodynamique est en fonctionnement avec passage du débit d'air insufflé sur l'évaporateur, et qui est actionné vers sa position de fermeture lors du passage en position de débit d'extraction maximum dans la cuisine.

6. Installation selon l'une quelconque des revendications 4 et 5, **caractérisée en ce que** le conduit de dérivation est équipé d'un module (21) de régulation de débit.

7. Installation de ventilation selon l'une des revendications 1 et 2, **caractérisée en ce que** le condenseur (17) du groupe thermodynamique est disposé sur le flux d'air insufflé à l'intérieur du logement et l'évaporateur (16) est disposé sur le flux d'air extrait du logement.

8. Installation de ventilation selon les revendications 3 à 7, **caractérisée en ce que** le groupe thermodynamique (8) est de type réversible, avec possibilité d'inverser le sens de fluide frigorigène et d'inverser les fonctions de l'évaporateur et du condenseur.

9. Installation de ventilation selon l'une des revendications 1 à 8, **caractérisée en ce que** le groupe thermodynamique (8) est relié à un clavier de commande (25) et piloté par un thermostat disposé dans le logement.

10. Installation de ventilation selon l'une des revendications 1 à 9, **caractérisée en ce que** les bouches d'insufflation d'air (20) dans les différentes pièces de séjour sont équipées d'un dispositif de chauffage électrique complémentaire de l'air insufflé, pouvant être commandé par une sonde de température (24) également reliée au groupe thermodynamique (8).

## Patentansprüche

1. Anlage zur Belüftung und thermischen Luftbehandlung in einem Gebäude mit mehreren Unterkünften, wobei die Anlage ein Doppelfluss-Belüftungssystem aufweist mit einer Belüftungs-Baugruppe, welche außerhalb des Gebäudes aufgenommene Luft in die Aufenthaltsräume, wie Wohnzimmer, Schlafzimmer, etc. ... der unterschiedlichen Unterkünfte bläst, und einer Belüftungs-Baugruppe (5), welche dieselben Kenngrößen wie die Einblas-Baugruppe hat und einen Luftabzug aus den technischen Räumen, wie Küchen, Badezimmern, etc.... der in die Aufenthaltsräume eingeblasenen Luft gewährleistet, wobei die Zufuhr und der Abzug von Luft bei jeder Unterkunft über Sammelleitungen am Gebäude erfolgen, **dadurch gekennzeichnet, dass** die Anlage bei dem Anschluss jeder Unterkunft an ein Leitungspaar (6, 7) für das Einblasen bzw. Abziehen von Luft eine individuelle thermodynamische Einheit (8) aufweist, die der betreffenden Unterkunft zugeordnet ist und über welche der Belüftungs-Luftstrom hindurchtritt, wobei der Verdampfer und der Kondensator dieser Baugruppe an dem Einblas-Luftstrom bzw. dem Abzug-Luftstrom angeordnet ist oder umgekehrt.

2. Anlage zur Belüftung nach Anspruch 1, **dadurch gekennzeichnet, dass** die thermodynamische Einheit (8) in einem Kasten untergebracht ist, der mindestens zwei Abteile aufweist, die jeweils mit einem Lufteinlass (10, 13) und einem Luftauslass (12, 14) ausgestattet sind und den Verdampfer (16) bzw. den Kondensator (17) der thermodynamischen Einheit enthalten.

3. Anlage zur Belüftung nach einem der Ansprüche 1 und 2, **dadurch gekennzeichnet, dass** der Verdampfer (16) der thermodynamischen Einheit (8) an dem ins Innere der Unterkunft eingeblasenen Luftstrom angeordnet ist und der Kondensator (17) an dem von der Unterkunft abgezogenen Luftstrom angeordnet ist.

4. Anlage zur Belüftung nach Anspruch 3, **dadurch gekennzeichnet, dass** sie eine Umgehungsleitung zwischen den den Verdampfer und den Kondensator enthaltenden Abteilen aufweist, die den Durchtritt eines nicht durch die Unterkunft hindurchtretenden zusätzlichen Luftdurchsatzes über den Kondensator (17) gewährleistet.

5. Anlage zur Belüftung nach Anspruch 4, **dadurch gekennzeichnet, dass** an der Umgehungsleitung ein Register (19) montiert ist, das in der Öffnungsstellung angeordnet ist, wenn die thermodynamische Einheit in dem Betrieb ist, bei dem der Luftdurchsatz über den Verdampfer eingeblasen wird, und der zu seiner Schließstellung hin betätigt wird beim Übergang in die Stellung mit maximalem Abzugsdurchsatz in der Küche.

6. Anlage nach einem der Ansprüche 4 und 5, **dadurch gekennzeichnet, dass** die Umgehungsleitung mit einem Durchsatz-Regelungsmodul (21) ausgestattet ist.

7. Anlage zur Belüftung nach einem der Ansprüche 1 und 2, **dadurch gekennzeichnet, dass** der Kondensator (17) der thermodynamischen Einheit an dem ins Innere der Unterkunft eingeblasenen Luftstrom angeordnet ist und der Verdampfer (16) an dem aus der Unterkunft abgezogenen Luftstrom angeordnet ist.

8. Anlage zur Belüftung nach Anspruch 3 bis 7, **dadurch gekennzeichnet, dass** die thermodynamische Einheit (8) reversibel ist und es ermöglicht, die Richtung des Kühlfluids umzukehren und die Funktionen des Verdampfers und des Kondensators umzukehren.

9. Anlage zur Belüftung nach einem der Ansprüche 1 bis 8, **dadurch gekennzeichnet, dass** die thermodynamische Einheit (8) mit einer Steuerungstastatur (25) verbunden ist und über einen in der Unterkunft angeordneten Thermostat angesteuert wird.

10. Anlage zur Belüftung nach einem der Ansprüche 1 bis 9, **dadurch gekennzeichnet, dass** die Lufteinblas-Mündungen (20) in den unterschiedlichen Aufenthaltsräumen mit einer ergänzenden elektrischen Heizvorrichtung für die eingeblasene Luft ausgestattet sind, welche durch eine Temperatursonde (24) gesteuert wird, die ebenfalls mit der thermodynamischen Einheit (8) verbunden ist.

## Claims

1. Installation for ventilation and for thermal treatment of the air in a building comprising a plurality of apartments, of the type comprising a double flow ventilation system having a ventilation unit, which insufflates the air taken from the exterior of the building into the living rooms: sitting rooms, bedrooms ... of the various apartments, and a ventilation unit (5), which has the same features as the insufflation unit and ensures the extraction of air out of the technical rooms: kitchens, bathrooms ... of the air insufflated into the living rooms, the supply and the extraction of air at the level of each apartment being produced by means of collective channels in the building, **characterised in that** it comprises, at the level of the connection of each apartment to one pair of channels (6, 7) respectively for insufflation and for extraction of air, an individual thermodynamic unit (8) which is dedicated to the apartment under consideration and over which the ventilation air flow flows, the evaporator and the condenser of this unit being disposed respectively on one of the two insufflation and extraction air flows.

2. Ventilation installation according to claim 1, **characterised in that** the thermodynamic unit (8) is accommodated in a chamber which comprises at least two compartments which are each equipped with an inlet (10, 13) and an outlet (12, 14) for air and contain respectively the evaporator (16) and the condenser (17) of the thermodynamic unit.

3. Ventilation installation according to one of the claims 1 and 2, **characterised in that** the evaporator (16) of the thermodynamic unit (8) is disposed on the flow of air which is insufflated in the interior of the apartment, and the condenser (17) is disposed on the flow of air which is extracted from the apartment.

4. Ventilation installation according to claim 3, **characterised in that** it includes a diversion channel between the compartments containing the evaporator and the condenser, ensuring the passage over the condenser (17) of a complementary air throughput which does not pass through the apartment.

5. Ventilation installation according to claim 4, **characterised in that**, on the diversion channel, there is mounted a damper (19) which is placed in the open position when the thermodynamic unit is functioning with passage of the air throughput insufflated over the evaporator, and which is actuated towards its closed position during transition into the position of maximum extraction throughput in the kitchen.

6. Installation according to any of the claims 4 and 5, **characterised in that** the diversion channel is equipped with a throughput control module (21).

7. Ventilation installation according to one of the claims 1 and 2, **characterised in that** the condenser (17) of the thermodynamic unit is disposed on the flow of air which is insufflated in the interior of the apartment and the evaporator (16) is disposed on the flow of air which is extracted from the apartment.

8. Ventilation installation according to claims 3 to 7, **characterised in that** the thermodynamic unit (8) is of the reversible type, with the possibility of reversing the direction of the refrigerant fluid and of reversing the functions of the evaporator and of the condenser.

9. Ventilation installation according to one of the claims 1 to 8, **characterised in that** the thermodynamic unit (8) is connected to a control keypad (25) and controlled by a thermostat which is disposed in the apartment.

10. Ventllation installation according to one of the claims 1 to 9, **characterised in that** the ports for insufflation of air (20) into the various living rooms are equipped with a complementary electrical heating device for the insufflated air, being able to be controlled by a temperature sensor (24) which is likewise connected to the thermodynamic unit (8).
